# EUROPÄISCHE PATENTSCHRIFT

(11) **EP 3 492 712 B1**
(45) Veröffentlichungstag und Bekanntmachung des Hinweises auf die Patenterteilung: **16.09.2020**
(21) Anmeldenummer: 18208584.5
(22) Anmeldetag: 27.11.2018
(51) Int. Cl.: F01D 25/28, F01D 9/04

(54) **STÜTZVORRICHTUNG FÜR EIN GEHÄUSE EINER STRÖMUNGSMASCHINE, GEHÄUSE FÜR EINE STRÖMUNGSMASCHINE UND STRÖMUNGSMASCHINE**
SUPPORT DEVICE FOR A HOUSING OF A TURBOMACHINE, HOUSING FOR A TURBOMACHINE AND TURBOMACHINE
DISPOSITIF SUPPORT POUR UN BOÎTIER D'UNE TURBOMACHINE, BOÎTIER POUR UNE TURBOMACHINE ET TURBOMACHINE

(30) Priorität: 01.12.2017 DE 102017221669
(43) Veröffentlichungstag der Anmeldung: 05.06.2019
(73) Patentinhaber: MTU Aero Engines AG, 80995 München (DE)
(72) Erfinder: Metscher, Martin, 81825 München (DE); Hägert, Jan, 82205 Gilching (DE)

(56) Entgegenhaltungen:
- EP-A1- 2 626 513
- EP-A1- 2 960 437
- EP-A2- 2 400 119
- DE-A1-102016 208 154
- US-A1- 2013 216 361

## Beschreibung

Die Erfindung betrifft eine Stützvorrichtung für ein Gehäuse einer Strömungsmaschine, zur Abstützung von beim Betrieb der Strömungsmaschine auftretenden Kräften an dem Gehäuse, umfassend zumindest ein Nabenelement sowie wenigstens ein Stützelement zum Halten des Nabenelements an dem Gehäuse. Weitere Aspekte der Erfindung betreffen ein Gehäuse für eine Strömungsmaschine sowie eine Strömungsmaschine.

Die DE 10 2016 208 154 A1 beschreibt ein Eintrittsleitgitter für einen Verdichter. Das Eintrittsleitgitter umfasst eine Haltestrebe zur Verbindung eines Innenteilelementes für eine Rotorwelle mit einem Gehäuseelement, eine verschwenkbare Klappe sowie eine Dichtung zum Abdichten eines Spalts zwischen der Haltestrebe und der verschwenkbaren Klappe. Die Dichtung weist mindestens eine Bürste mit Borsten auf, die mindestens teilweise in den Spalt hineinragen.

Aus der US 2017/0030223 A1 ist eine Gasturbine bekannt, bei welcher durch eine Mehrzahl an Streben eine metallische Struktur gebildet ist, über welche Last von einer Nabe auf ein Turbinengehäuse der Gasturbine übertragbar ist. Die Nabe stützt einen Rotor und überträgt statische und dynamische Lasten durch die Streben an das Gehäuse. Die Streben sind einteilig mit einer Oberfläche der Nabe ausgebildet und beispielsweise mit der Oberfläche der Nabe verschweißt oder verlötet. Eine derartige Gasturbine ist auch der GB 2 280 484 A als bekannt zu entnehmen. Das Dokument EP 2 960 437 A1 beschreibt eine Leiteinrichtung für eine Gasturbine, mit wenigstens einem Gehäuseelement, mit wenigstens einem in radialer Richtung innenseitig des Gehäuseelements angeordneten, ersten Kanalsegment, durch welches zumindest ein von einem Gas durchströmbarer Kanal in radialer Richtung nach außen wenigstens teilweise begrenzt ist. Das Dokument US 2013/216361 A1 beschreibt eine Schaufelanordnung für ein Gasturbinentriebwerk mit Flügelelementen. Das Dokument EP 2 400 119 A2 beschreibt eine Turbomaschine mit einer Schaufelreihengruppe. Das Dokument EP 2 626 513 A1 beschreibt auch eine Strömungsmaschine mit einer Schaufelreihengruppe.

Aufgabe der vorliegenden Erfindung ist es, eine Stützvorrichtung, ein Gehäuse sowie eine Strömungsmaschine der eingangs genannten Art zu schaffen, durch welche eine besonders günstige Lastverteilung von beim Betrieb der Strömungsmaschine auftretenden Kräften ermöglicht ist. Diese Aufgabe wird durch eine Stützvorrichtung mit den Merkmalen des Patentanspruchs 1, durch ein Gehäuse mit den Merkmalen des Patentanspruchs 6 sowie durch eine Strömungsmaschine mit den Merkmalen des Patentanspruchs 8 gelöst. Vorteilhafte Ausgestaltungen mit zweckmäßigen Weiterbildungen der Erfindung sind in den Unteransprüchen angegeben.

Ein erster Aspekt der Erfindung betrifft eine Stützvorrichtung für ein Gehäuse einer Strömungsmaschine, gemäß Anspruch 1, zur Abstützung von beim Betrieb der Strömungsmaschine auftretenden Kräften an dem Gehäuse, umfassend zumindest ein Nabenelement sowie wenigstens ein Stützelement zum Halten des Nabenelements an dem Gehäuse. Das Nabenelement kann zumindest bereichsweise rotationssymmetrisch ausgebildet sein und beispielsweise einen Außenumfang aufweisen, an welchem das Nabenelement mittels des Stützelements oder mehrerer Stützelemente an dem Gehäuse abgestützt sein kann. Das Stützelement kann ein gehäuseseitiges Elementende aufweisen, an welchem das Stützelement bevorzugt stoffschlüssig mit dem Gehäuse verbunden, also beispielsweise mit dem Gehäuse verschweißt, sein kann.

Zudem umfasst die Stützvorrichtung wenigstens ein Drehgelenk, mittels welchem das Nabenelement drehbar mit dem Stützelement verbunden ist. Dies ist von Vorteil, da hierdurch eine Übertragung von Biegemomenten, welche durch die beim Betrieb der Strömungsmaschine auftretenden Kräfte hervorgerufen werden können, zwischen dem Stützelement und dem Nabenelement verhindert werden kann. Durch das Verhindern der Übertragung von Biegemomenten kann ein Entstehen von unzulässig hohen, aus den Biegemomenten resultierenden Zugspannungen an einem Verbindungsbereich, an welchem das Stützelement mit dem Nabenelement verbunden ist, wirksam unterbunden werden. Stattdessen ist eine besonders günstige Lastverteilung und Lasteinleitung durch den Einsatz des wenigstens einen Drehgelenks zur Verbindung des Nabenelements mit dem Stützelement gegeben.

Beim Betrieb der Strömungsmaschine kann das wenigstens eine Drehgelenk einen betriebsbedingten Versatz des Nabenelements, beispielsweise entlang einer Mittelachse einer sich durch das Gehäuse erstreckenden Gehäuseöffnung ermöglichen. Da durch das Drehgelenk eine Relativdrehung zwischen dem Nabenelement und dem Stützelement ermöglicht ist, kann eine kritische Deformation unter Ausbildung von biegemomentbedingten, kritischen Spannungen des Stützelements vermieden werden. Stattdessen begünstigt das Drehgelenk eine unkritische Deformation des Stützelements.

Im Gegensatz zu einer biegesteifen Verbindung, beispielsweise in Form einer Schweißverbindung oder einer Lötverbindung, zwischen dem Stützelement und dem Nabenelement kann somit durch das wenigstens eine Drehgelenk zumindest eine Relativdrehung um wenigstens eine Drehachse zwischen dem zumindest einen Nabenelement und dem wenigstens einen Stützelement infolge von beim Betrieb der Strömungsmaschine auf das zumindest eine Nabenelement wirkenden Kräften, insbesondere Axialkräften, freigeben werden. Dadurch kann beim Betrieb der Strömungsmaschine eine besonders spannungsarme Belastung der Stützvorrichtung erfolgen.

Gemäß der Erfindung ist das wenigstens eine Stützelement als Strebe ausgebildet. Dies ist von Vorteil, da eine derartige Strebe einen besonders einfachen Aufbau aufweist und eine Abstützung des Nabenelements bzw. von betriebsbedingten Kräften an dem Gehäuse unter einem besonders günstigen Kraftfluss ermöglicht.

Gemäß der Erfindung ist zudem vorgesehen, dass das zumindest eine Nabenelement eine Durchgangsöffnung zur Aufnahme eines Wellenelements, insbesondere einer Rotorwelle, der Strömungsmaschine aufweist. Dies ist von Vorteil, da mittels des Nabenelements eine besonders günstige Lagerung des Wellenelements sowie ein spannungsarmer Kraftfluss von betriebsbedingten Kräften zwischen dem Wellenelement und dem Gehäuse ermöglicht ist.

Bevorzugt kann das Nabenelement dazu ausgebildet sein das Wellenelement zumindest mittelbar abzustützen. Ein mittelbares Abstützen kann beispielsweise über ein an dem Nabenelement angeordnetes, insbesondere fixiertes, Lagerelement, beispielsweise in Form eines Wälzlagers erfolgen. In der Einbaulage der Stützvorrichtung und damit bei deren bestimmungsgemäßem Gebrauch kann das Lagerelement also zwischen dem Nabenelement und dem Wellenelement angeordnet, insbesondere fixiert, sein.

In einer vorteilhaften Weiterbildung der Erfindung ist das wenigstens ein Drehgelenk als Scharniergelenk ausgebildet ist. Dies ist von Vorteil, da durch das Scharniergelenk eine gezielte Drehbewegung (Relativdrehung) um eine Drehachse ermöglicht ist. Das Scharniergelenk ermöglicht dementsprechend eine besonders gezielte Lastverteilung bzw. Lasteinleitung von betriebsbedingten Kräften.

In einer weiteren vorteilhaften Weiterbildung der Erfindung ist das wenigstens ein Drehgelenk als Kugelgelenk ausgebildet. Dies ist von Vorteil, da durch das Kugelgelenk mehrere Drehbewegungen um mehrere Drehachsen ermöglicht sind. Dementsprechend sind durch das Kugelgelenk mehrere Drehfreiheitsgrade freigegeben, wodurch das Übertragen von aus betriebsbedingten Kräften resultierenden Biegemomenten von dem Nabenelement auf das Stützelement sogar vollständig unterbunden werden kann. Dadurch ist eine besonders spannungsarme Lastverteilung ermöglicht.

In einer weiteren vorteilhaften Weiterbildung der Erfindung weist das wenigstens ein Drehgelenk zumindest ein Gelenkelement auf, welches drehbar in einer Ausnehmung des wenigstens einen Stützelements oder des zumindest einen Nabenelements aufgenommen ist. Dies ist von Vorteil, da hierdurch eine besonders platzsparende Koppelung zwischen dem Stützelement und dem Nabenelement über das Drehgelenk ermöglicht ist. Ein weiterer Vorteil besteht darin, dass durch das drehbare Anordnen des Gelenkelements in der Ausnehmung nicht nur eine Drehbewegung zwischen dem Stützelement und dem Nabenelement ermöglicht ist, sondern auch ein Schwenkwinkel zwischen dem Stützelement und dem Nabenelement besonders aufwandsarm eingeschränkt werden kann. Dies ist damit zu begründen, dass das Gelenkelement durch dessen Aufnahme in der Ausnehmung gleichzeitig einen Anschlag ausbilden kann, bei welchem das Gelenkelement bei Erreichen eines maximal zulässigen Schwenkwinkels an mehreren Stellen an dem Stützelement abgestützt sein kann.

In einer weiteren vorteilhaften Weiterbildung der Erfindung ist das zumindest eine Gelenkelement formschlüssig in der Ausnehmung des wenigstens einen Stützelements oder des zumindest einen Nabenelements aufgenommen. Dies ist von Vorteil, da durch die formschlüssige Aufnahme eine besonders verliersicher Koppelung zwischen dem Gelenkelement und dem Stützelement oder dem Nabenelement geschaffen ist. Des Weiteren ist durch die formschlüssige Aufnahme eine besonders belastbare Drehverbindung geschaffen, bei welcher eine besonders großflächige Kraftverteilung zwischen dem Gelenkelement und dem Stützelement erfolgen kann.

Ein zweiter Aspekt der Erfindung betrifft ein Gehäuse für eine Strömungsmaschine, gemäß Anspruch 6, mit zumindest einer Stützvorrichtung gemäß dem ersten Aspekt der Erfindung. Durch ein derartiges Gehäuse ist besonders günstige Lastverteilung von beim Betrieb der Strömungsmaschine auftretenden Kräften ermöglicht.

In einer vorteilhaften Weiterbildung der Erfindung ist das Gehäuse als Turbinenzwischengehäuse ausgebildet. Dies ist von Vorteil, da das Turbinenzwischengehäuse eine besonders günstige Schnittstelle zwischen einer Hochdruckturbinenseite und einer Niederdruckturbinenseite der Strömungsmaschine darstellen kann. Über das Turbinenzwischengehäuse kann Heißgas mit einer Gastemperatur von über 1000 °C von der Hochdruckturbinenseite zu der Niederdruckturbinenseite strömen. Durch die günstige Lastverteilung, welche durch die Stützvorrichtung erzielbar ist, weist das mit der Stützvorrichtung ausgestattete, also die Stützvorrichtung umfassende, Turbinenzwischengehäuse ein besonders spannungsarmes Verformungsverhalten (Deformationsverhalten) selbst bei einem Durchtreten des Heißgases durch das Turbinenzwischengehäuse mit einer derart hohen Gastemperatur auf.

Ein dritter Aspekt der Erfindung betrifft eine Strömungsmaschine, gemäß Anspruch 8, mit wenigstens einer Stützvorrichtung gemäß dem ersten Aspekt der Erfindung und/oder mit einem Gehäuse gemäß dem zweiten Aspekt der Erfindung. Bei einer derartigen Strömungsmaschine ist eine besonders günstige Lastverteilung von beim Betrieb der Strömungsmaschine auftretenden Kräften ermöglicht. In einer vorteilhaften Weiterbildung der Erfindung ist die Strömungsmaschine eine Gasturbine. Eine Gasturbine weist einen besonders hohen Wirkungsgrad auf. Zudem weist eine mit der Stützvorrichtung ausgestattete Gasturbine selbst bei hohen Gastemperatur bzw. großen betriebsbedingten Kräften ein besonders günstiges Verformungsverhalten auf.

Die Ausführungen zu einem der Aspekte der Erfindung, insbesondere zu einzelnen Merkmalen dieses Aspektes, gelten entsprechend auch analog für die anderen Aspekte der Erfindung. Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Dabei zeigt:
Fig. 1 einen Teilbereich einer Strömungsmaschine;
Fig. 2 eine bereichsweise, schematische Darstellung eines Gehäuses der Strömungsmaschine sowie einer an dem Gehäuse befestigten Stützvorrichtung gemäß eines in Fig. 1 gezeigten Bereichs A;
Fig. 3 eine schematische Darstellung einer aus dem Stand der Technik bekannten Naben-Streben-Verbindung.

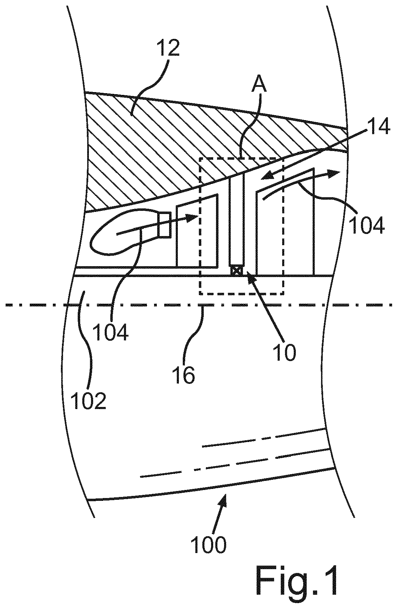

**FIG. 1** zeigt einen Teilbereich einer vorliegend lediglich bereichsweise dargestellten und als Gasturbine ausgebildeten Strömungsmaschine 100. Die Strömungsmaschine 100 umfasst ein Gehäuse 12, welches vorliegend als Turbinenzwischengehäuse ausgebildet ist. Beim Betrieb der Strömungsmaschine 100 rotiert ein Wellenelement 102 der Strömungsmaschine 100 innerhalb einer Gehäuseöffnung 14 des Gehäuses 12. Zudem strömt Heißgas 104 durch die Gehäuseöffnung 14 des Gehäuses 12 und dabei von einer Hochdruckturbinenseite der Strömungsmaschine 100 zu einer Niederdruckturbinenseite der Strömungsmaschine 100. Die Gehäuseöffnung 14 ist vorliegend als kanalartige Durchgangsöffnung ausgebildet.

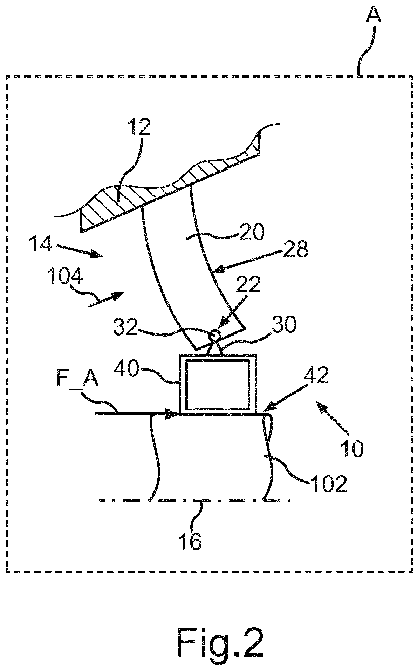

**FIG. 2** zeigt eine bereichsweise, schematische Darstellung des Gehäuses 12 gemäß eines in Fig. 1 gezeigten, umrandeten Bereichs A, wobei eine Stützvorrichtung 10 in der Durchgangsöffnung 14 des Gehäuses 12 angeordnet ist. Die Stützvorrichtung 10 dient zur Abstützung von beim Betrieb der Strömungsmaschine 100 auftretenden Kräften, wie beispielsweise einer in Fig. 2 durch einen Pfeil verdeutlichten Axialkraft F_A an dem Gehäuse 12. Die Stützvorrichtung 10 umfasst ein Nabenelement 40, an welchem vorliegend die Axialkraft F_A angreift.

Des Weiteren umfasst die Stützvorrichtung 10 eine Mehrzahl von als jeweilige Streben ausgebildeten Stützelementen, von welchen vorliegend lediglich ein einzelnes Stützelement 20 gezeigt ist. Die Stützelemente können beispielsweise jeweils stoffschlüssig mit dem Gehäuse 12 verbunden, also beispielsweise verschweißt, sein. Das als Strebe ausgebildete Stützelement 20 dient zum Halten des Nabenelements 40 an dem Gehäuse 12. Die nachfolgenden, das Stützelement 20 betreffenden Ausführungen gelten sinngemäß auch für die weiteren, in Fig. 2 nicht dargestellten Stützelemente, welche umfangsseitig entlang dem Gehäuse 12 in der Gehäuseöffnung 14 angeordnet und jeweils mit dem Nabenelement 40 drehbar verbunden sind.

Das Nabenelement 40 weist eine Durchgangsöffnung 42 zur Aufnahme des Wellenelements 102, welches vorliegend als Rotorwelle der Strömungsmaschine 100 ausgebildet ist, auf. Die Axialkraft F_A kann beispielsweise infolge von temperaturbedingten Längenänderungen des Wellenelements 102 auftreten, um nur ein Beispiel zu nennen.

Die Stützvorrichtung 10 umfasst mehrere Drehgelenke, von welchen jeweils eines mit jeweils einem der Stützelemente sowie mit dem Nabenelement 40 verbunden ist. Vorliegend ist lediglich ein einziges Drehgelenk 30 in Fig. 2 gezeigt. Mittels der Drehgelenke ist das Nabenelement 40 drehbar mit dem Stützelement 20 verbunden. Die Drehgelenke sind vorliegend als jeweilige Scharniergelenke ausgebildet. Alternativ dazu könnten die Drehgelenke auch als jeweilige Kugelgelenke ausgebildet sein. Die nachfolgenden, das Drehgelenk 30 betreffenden Ausführungen gelten sinngemäß auch für die weiteren, in Fig. 2 nicht dargestellten Drehgelenke, welche jeweils mit dem Nabenelement 40 gekoppelt sind.

Das Drehgelenk 30 kann zumindest eine Relativdrehung zwischen dem Nabenelement 40 und dem Stützelement 20 infolge der auf das Nabenelement 40 wirkenden Axialkraft F_A freigeben.

Beim Betrieb der Strömungsmaschine 100 ermöglicht das Drehgelenk 30 (und damit sämtliche Drehgelenke) beispielsweise einen betriebsbedingten, axialen Versatz des Nabenelements 40, beispielsweise entlang einer Mittelachse 16 der sich durch das Gehäuse 12 erstreckenden Gehäuseöffnung, in welcher die Stützvorrichtung 10 vorliegend angeordnet ist. Diese Mittelachse 16 entspricht vorliegend auch einer Elementmittelachse des Nabenelements 40 sowie einer Wellenachse des Wellenelements 102. Beim Versatz des Nabenelements 40 kommt es zu einer unkritischen Deformation 28 in Form einer zumindest geringfügigen Durchbiegung des Stützelements 20. Dabei wird ein Auftreten von kritischen Spannungen in der Stützvorrichtung 10 und insbesondere im Stützelement 20 zumindest weitgehend vermieden.

Das Drehgelenk 30 weist ein Gelenkelement 32 auf, welches drehbar in einer Ausnehmung 22 des Stützelements 20 aufgenommen ist. Alternativ dazu könnte die Ausnehmung 22 auch in dem Nabenelement 40 vorgesehen und dementsprechend das Gelenkelement 32 in das Nabenelement 40 eingeführt sein. Das Gelenkelement 32 ist formschlüssig in der Ausnehmung 22 des wenigstens einen Stützelements 20 aufgenommen.

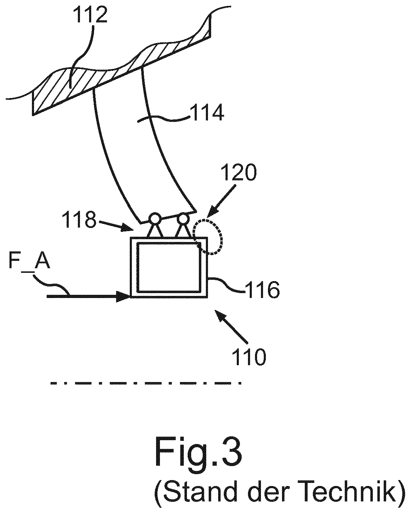

**FIG. 3** zeigt eine aus dem Stand der Technik bekannte Naben-Streben-Verbindung 110, welche eine Strebe 114 und eine Nabe 116 aufweist. Die Strebe 114 und die Nabe 116 sind an einem Verbindungsbereich 118 biegesteif, beispielsweise durch eine Schweißverbindung, miteinander verbunden. Die Strebe 114 ist dabei mit einer Gehäusekomponente 112 verschweißt. Infolge der auf die Nabe 116 wirkenden Axialkraft F_A kommt es zu einer Verschiebung der Nabe 116 und dadurch zum Auftreten eines kritischen, in Fig. 3 gestrichelt gekennzeichneten, Spannungsbereichs 120, an welchem unzulässig große Spannungen auftreten können. Des Weiteren tritt eine ungünstige, S-förmige Deformation der torsionssteifen Naben-Streben-Verbindung 110 im Bereich der Strebe 114 auf, wie Fig. 3 zu entnehmen ist.

Der in Fig. 3 gezeigte, ungünstige Spannungsbereich 120 sowie die S-förmige Deformation treten bei der Stützvorrichtung 10 aufgrund der Drehgelenke hingegen nicht auf. Dementsprechend wird auch das Auftreten von unzulässig großen Zugspannungen in der Stützvorrichtung 10 durch die Drehgelenke wirksam unterbunden. Durch die Drehgelenke wird eine jeweilige Gelenksstelle geschaffen, welche eine im Vergleich zu der aus dem Stand der Technik bekannten Naben-Streben-Verbindung 110 verbesserte, lastgerechte Spannungsverteilung ermöglicht.

Da durch das Drehgelenk 30 eine Relativdrehung zwischen dem Nabenelement 40 und dem Stützelement 20 ermöglicht ist, kann also mit anderen Worten die kritische S-förmige Deformation unter Ausbildung von biegemomentbedingten, kritischen Spannungen vermieden werden. Stattdessen begünstigt das Drehgelenk 30 die unkritische Deformation 28 des jeweiligen Stützelements 20. Bei der unkritischen Deformation 28 kommt es statt der S-förmigen, in Fig. 3 gezeigten Deformation lediglich zu einem, in Fig. 2 gezeigten, Durchbiegen des Stützelements 20.

### Bezugszeichenliste:

- 10: Stützvorrichtung
- 12: Gehäuse
- 14: Gehäuseöffnung
- 16: Mittelachse
- 20: Stützelement
- 22: Ausnehmung
- 28: Deformation
- 30: Drehgelenk
- 32: Gelenkelement
- 40: Nabenelement
- 42: Durchgangsöffnung
- 100: Strömungsmaschine
- 102: Wellenelement
- 104: Heißgas
- 110: Naben-Streben-Verbindung
- 112: Gehäusekomponente
- 114: Strebe
- 116: Nabe
- 118: Verbindungsbereich
- 120: Spannungsbereich
- F_A: Axialkraft

## Patentansprüche

1. Stützvorrichtung (10) für ein Gehäuse (12) einer Strömungsmaschine (100), zur Abstützung von beim Betrieb der Strömungsmaschine (100) auftretenden Kräften an dem Gehäuse (12), umfassend zumindest ein Nabenelement (40) sowie wenigstens ein Stützelement (20) zum Halten des Nabenelements (40) an dem Gehäuse (12), wobei die Stützvorrichtung (10) wenigstens ein Drehgelenk (30) umfasst, mittels welchem das Nabenelement (40) drehbar mit dem Stützelement (20) verbunden ist,
**dadurch gekennzeichnet, dass**
das wenigstens eine Stützelement (10) als Strebe ausgebildet ist und das zumindest eine Nabenelement (40) eine Durchgangsöffnung (42) zur Aufnahme eines Wellenelements (102) der Strömungsmaschine (100) aufweist.

2. Stützvorrichtung (10) nach Anspruch 1,
**dadurch gekennzeichnet, dass**
das wenigstens ein Drehgelenk (30) als Scharniergelenk ausgebildet ist.

3. Stützvorrichtung (10) nach Anspruch 1,
**dadurch gekennzeichnet, dass**
das wenigstens ein Drehgelenk (30) als Kugelgelenk ausgebildet ist.

4. Stützvorrichtung (10) nach einem der vorhergehenden Ansprüche,
**dadurch gekennzeichnet, dass**
das wenigstens ein Drehgelenk (30) zumindest ein Gelenkelement (32) aufweist, welches drehbar in einer Ausnehmung (22) des wenigstens einen Stützelements (20) oder des zumindest einen Nabenelements (40) aufgenommen ist.

5. Stützvorrichtung (10) nach Anspruch 4,
**dadurch gekennzeichnet, dass**
das zumindest eine Gelenkelement (32) formschlüssig in der Ausnehmung (22) des wenigstens einen Stützelements (20) oder des zumindest einen Nabenelements (40) aufgenommen ist.

6. Gehäuse (12) für eine Strömungsmaschine (100), mit zumindest einer Stützvorrichtung (10) nach einem der Ansprüche 1 bis 5.

7. Gehäuse (12) nach Anspruch 6,
**dadurch gekennzeichnet, dass**
das Gehäuse (12) als Turbinenzwischengehäuse ausgebildet ist.

8. Strömungsmaschine (100), mit wenigstens einer Stützvorrichtung (10) nach einem der Ansprüche 1 bis 5 und/oder mit einem Gehäuse (12) nach Anspruch 6 oder 7.

9. Strömungsmaschine (100) nach Anspruch 8,
**dadurch gekennzeichnet, dass**
die Strömungsmaschine (100) eine Gasturbine ist.

## Claims

1. Support device (10) for a housing (12) of a turbomachine (100), for bracing against forces on the housing (12) that occur during operation of the turbomachine (100), comprising at least one hub element (40) and at least one support element (20) for holding the hub element (40) on the housing (12), the support device (10) comprising at least one rotational joint (30), by means of which the hub element (40) is rotatably connected to the support element (20), **characterized in that** the at least one support element (10) is designed as a strut and the at least one hub element (40) has a through-opening (42) for receiving a shaft element (102) of the turbomachine (100).

2. Support device (10) according to claim 1, **characterized in that** the at least one rotational joint (30) is designed as a hinge joint.

3. Support device (10) according to claim 1, **characterized in that** the at least one rotational joint (30) is designed as a ball joint.

4. Support device (10) according to any of the preceding claims, **characterized in that** the at least one rotational joint (30) has at least one joint element (32) which is rotatably received in a recess (22) in the at least one support element (20) or in the at least one hub element (40).

5. Support device (10) according to claim 4, **characterized in that** the at least one joint element (32) is received in a form-fitting manner in the recess (22) in the at least one support element (20) or in the at least one hub element (40).

6. Housing (12) for a turbomachine (100), comprising at least one support device (10) according to any of claims 1 to 5.

7. Housing (12) according to claim 6, **characterized in that** the housing (12) is designed as an intermediate turbine housing.

8. Turbomachine (100) comprising at least one support device (10) according to any of claims 1 to 5 and/or comprising a housing (12) according to either claim 6 or claim 7.

9. Turbomachine (100) according to claim 8, **characterized in that** the turbomachine (100) is a gas turbine.

## Revendications

1. Dispositif de support (10) destiné à un carter (12) d'une turbomachine (100), pour supporter des forces agissant sur le carter (12) lors du fonctionnement de la turbomachine (100), comprenant au moins un élément de moyeu (40) ainsi qu'au moins un élément de support (20) pour maintenir l'élément de moyeu (40) sur le carter (12), le dispositif de support (10) comprenant au moins une articulation rotative (30) au moyen de laquelle l'élément de moyeu (40) est relié de manière rotative à l'élément de support (20),
**caractérisé en ce que**
l'au moins un élément de support (10) est conçu sous la forme d'une entretoise, et **en ce que** l'au moins un élément de moyeu (40) présente une ouverture de passage (42) pour recevoir un élément d'arbre (102) de la turbomachine (100).

2. Dispositif de support (10) selon la revendication 1,
**caractérisé en ce que**
l'au moins une articulation rotative (30) est conçue sous la forme d'une articulation à charnière.

3. Dispositif de support (10) selon la revendication 1,
**caractérisé en ce que**
l'au moins une articulation rotative (30) est conçue sous la forme d'une articulation à rotule.

4. Dispositif de support (10) selon l'une des revendications précédentes,
**caractérisé en ce que**
l'au moins une articulation rotative (30) présente au moins un élément d'articulation (32) qui est reçu de manière rotative dans un évidement (22) de l'au moins un élément de support (20) ou de l'au moins un élément de moyeu (40).

5. Dispositif de support (10) selon la revendication 4,
**caractérisé en ce que**
l'au moins un élément d'articulation (32) est reçu par complémentarité de forme dans l'évidement (22) de l'au moins un élément de support (20) ou de l'au moins un élément de moyeu (40).

6. Carter (12) destiné à une turbomachine (100), comportant au moins un dispositif de support (10) selon l'une des revendications 1 à 5.

7. Carter (12) selon la revendication 6,
**caractérisé en ce que**
le carter (12) est conçu sous la forme d'un carter intermédiaire de turbine.

8. Turbomachine (100) comportant au moins un dispositif de support (10) selon l'une des revendications 1 à 5 et/ou comportant un carter (12) selon la revendication 6 ou 7.

9. Turbomachine (100) selon la revendication 8,
**caractérisée en ce que**
la turbomachine (100) est une turbine à gaz.
